# DEMANDE DE BREVET EUROPEEN

(11) **EP 2 915 438 A1**
(43) Date de publication de la demande: **09.09.2015**
(21) Numéro de dépôt: 15157351.6
(22) Date de dépôt: 03.03.2015
(51) Int. Cl.: A23L 3/3409, A23L 3/3463, A23L 3/3571

(54) **Procédé de conditionnement sous atmosphère protectrice mettant en uvre un gaz bioprotecteur**

(30) Priorité: 05.03.2014 FR 1451786
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Ibarra, Dominique, 91190 GIF-SUR-YVETTE (FR)
(74) Mandataire: Mellul-Bendelac, Sylvie Lisette

(57) **Abrégé**

Un procédé de conditionnement d'un produit (3), notamment d'un produit alimentaire, sous atmosphère de protection, du type où :
- on positionne le produit dans un emballage ;
- on introduit dans l'emballage une atmosphère de protection ;
- on scelle l'emballage (4);
se caractérisant en ce que l'atmosphère de protection est une atmosphère de bio-conservation obtenue de la façon suivante : on a introduit dans le gaz ou mélange gazeux destiné à constituer l'atmosphère à sceller dans l'emballage une composition (1) comportant une substance bioactive ou un mélange de substances bioactives choisie(s).

## Description

La présente invention concerne le domaine du conditionnement de produits alimentaires sous atmosphère modifiée, et s'intéresse tout particulièrement à ce que l'on appelle la « bio-préservation ».

La bio-préservation d'un aliment est une technologie de conservation dont le principe est d'ajouter sur ou dans cet aliment des micro-organismes sélectionnés pour leurs capacités à inhiber la croissance de micro-organismes endogènes indésirables et tout particulièrement de microflores d'altération et microflores pathogènes.

On sait que les micro-organismes exogènes, c'est-à-dire « ajoutés », « introduits », sont vivants, et qu'en se développant, ils entrent en compétition avec la flore déjà présente, qu'ils dominent, et agissent ainsi comme une barrière microbiologique. Cette barrière est également due à la capacité des micro-organismes choisis à produire des métabolites néfastes pour la flore endogènes, tels que par exemple des bactériocines, des acides organiques, ou bien, dans le cas des bactéries lactiques, du peroxyde d'hydrogène. Les phénomènes d'altération sont alors retardés, ce qui permet de préserver les qualités sensorielles des produits. L'objectif de telles procédures est d'allonger la Date Limite de Consommation de l'aliment et/ou de maîtriser le développement d'un germe pathogène donné, et ainsi assurer la sécurité du consommateur. Des applications directes de métabolites, notamment de bactériocines, sur les produits ont également été testées, la nisine étant la bactériocine la plus couramment utilisée à ce jour.

La bio-préservation est particulièrement intéressante dans des produits conditionnés sous vide ou sous atmosphère protectrice, à date limite de consommation supérieure à 5 jours entre 0 et 4°C, où le développement de *Listeria monocytogenes* demeure le principal risque sanitaire à maîtriser. *Staphylococcus aureus* ou des sérotypes d'*Escherichia coli* entéropathogènes sont parfois également visés dans les applications impliquant des produits laitiers ou carnés. D'autres études encore concernent *Bacillus cereus, Clostridium botulinum, Yersinia* ou *Campylobacter.*

Ainsi par exemple, le ferment LLO™ est commercialisé, il est proposé sous forme lyophilisée à dissoudre dans l'eau, pour qu'une suspension de ferment protecteur soit appliquée sur l'aliment par pulvérisation ou directement intégrée à sa composition.

On peut de façon plus générale résumer les approches déjà rapportées dans la littérature de la façon suivante :

### - L'Incorporation d'une suspension de micro-organismes ou métabolites dans la composition de l'aliment

Cette solution n'est pas sans présenter des inconvénients notables, ainsi elle convient uniquement pour des produits liquides ou pâteux, elle ne s'applique pas à un grand nombre de produits tels que viandes, fruits et légumes, poissons etc...

Par ailleurs, elle n'est pas non plus adaptée aux produits ayant à subir un traitement thermique qui détruirait les micro-organismes incorporés : une cuisson de plat cuisiné par exemple. Pour finir, il n'est pas toujours aisé de répartir le liquide de façon homogène dans l'aliment.

### - La Pulvérisation d'une suspension de micro-organismes ou métabolites sur l'aliment

Ici encore, cette mise en oeuvre présente plusieurs inconvénients, et notamment des difficultés de reproductibilité du dosage des micro-organismes ou métabolites, et des difficultés de rendre homogène la répartition des micro-organismes ou métabolites sur toute la surface du produit, sans oublier un inconvénient majeur, soulevé par de nombreux industriels, à savoir la dissémination des micro-organismes_dans l'ensemble de l'atelier de production.

On pourra notamment se reporter au document WO02/26059, qui propose la mise en oeuvre de deux étapes distinctes : l'application d'une culture bioactive sur le produit puis l'emballage du produit dans une atmosphère contenant du CO₂ ou bien l'introduction d'une atmosphère de CO₂ dans l'emballage contenant le produit, puis l'introduction d'une culture bioactive dans l'emballage avant fermeture de l'emballage.

Un des objectifs de la présente invention est alors de proposer une nouvelle procédure de bio-préservation et donc une nouvelle méthode de mise en contact du produit, par exemple d'un produit alimentaire, avec des micro-organismes sélectionnés et/ou leurs métabolites.

Comme on le verra plus en détails dans ce qui suit, la présente invention propose de mettre en oeuvre des micro-organismes et/ou leurs métabolites, et tout particulièrement des ferments lactiques ou des bactériocines, au travers de la mise en oeuvre d'un gaz lors de la mise sous atmosphère protectrice du produit considéré.

Plus précisément, au lieu de procéder en 2 étapes (application du ferment au contact de l'aliment puis conditionnement sous atmosphère protectrice), l'invention propose de mettre en oeuvre les micro-organismes et/ou leurs métabolites au travers de la mise sous atmosphère modifiée, par incorporation du micro-organisme et/ou d'un métabolite dans le gaz destiné à l'atmosphère à sceller dans l'emballage.

Les micro-organismes envisagés selon l'invention sont notamment des bactéries, des levures, des champignons, des archébactéries et protistes, ou bien des virus tels que par exemple les bactériophages (ou plus simplement phages, qui sont capables d'infecter et lyser des bactéries). Les métabolites de micro-organismes envisagés selon l'invention sont notamment des bactériocines (famille de peptides ou protéines synthétisés naturellement par certaines bactéries et ayant des propriétés bactériocides et/ou bactériostatiques), ou des acides organiques ou du peroxyde d'hydrogène.

Cette façon de procéder, en une seule étape, présente plusieurs avantages, et notamment :
- la réduction du nombre d'étapes de production,
- le dosage maîtrisé de la quantité de micro-organismes et/ou de métabolites introduits,
- le travail en système fermé donc la résolution du problème de la dispersion des micro-organismes dans l'atmosphère comme observé dans l'art antérieur (pas de colonisation des locaux).

Pour simplifier la lecture de ce qui suit, et la compréhension de l'invention, on parlera dans ce qui suit de «substance bioactive » pour évoquer les deux notions de micro-organismes et de métabolites de micro-organismes.

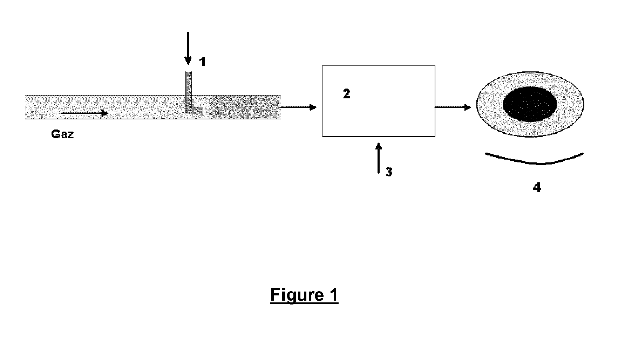

L'invention propose donc de conditionner des produits, par exemple alimentaires, avec du gaz contenant une suspension de substances bioactives, comme illustré dans la figure 1 annexée, qui est une représentation schématique partielle d'un mode de mise en oeuvre de l'invention.

Le gaz mis en oeuvre pour la mise sous atmosphère protectrice peut notamment être du CO₂, de l'azote, de l'oxygène, de l'argon, de l'hydrogène, du N₂O, de l'hélium ou un mélange d'un ou plusieurs de ces gaz. Cependant, la composition gazeuse, qui doit être déterminée en fonction du type de produit alimentaire concerné, pourra être ajustée en fonction du type de substance(s) bioactive(s) mise(s) en oeuvre, par exemple de ferment utilisé. Ainsi par exemple, pour des bactéries lactiques (micro-organismes anaérobies), il est préférable de ne pas utiliser d'oxygène afin de faciliter la colonisation du produit par ces bactéries, l'homme du métier comprend parfaitement la nécessité de certains choix de gaz.

Prenons dans ce qui suit l'exemple des ferments lactiques, ceci pour fixer les idées et ainsi mieux comprendre l'invention.

Le ferment lactique, préférentiellement en suspension dans un liquide, est injecté dans la conduite de gaz sous forme de très petites gouttelettes, formant ainsi un brouillard gazeux. Ce dernier approvisionne la conditionneuse qui réalise la mise sous atmosphère protectrice du produit dans un emballage.

On évoque dans ce qui précède une suspension dans un liquide mais on peut également envisager une utilisation d'une poudre, avec formation d'une suspension solide dans un gaz.

En revenant à l'exemple de la suspension dans un liquide, le ferment lactique peut être dispersé dans la conduite de gaz par exemple par pulvérisation à l'aide d'une buse sous pression de liquide (le liquide est pulvérisé en passant à travers un orifice, l'énergie de dispersion étant apportée par le liquide lui-même, véhiculé sous pression).

Il est également possible d'utiliser un injecteur Venturi dont le principe est le suivant : au niveau du rétrécissement (aspiration) de la section de l'injecteur, l'effet Venturi crée une dépression qui permet d'aspirer un fluide dans l'injecteur dans lequel circule le gaz, ce qui assure un mélange turbulent immédiat des deux fluides.

Mais d'autres techniques de dispersion peuvent être utilisées pour former le brouillard de gaz comportant le ferment, comme par exemple un nébuliseur ultrasonique ou concentrique, dispositifs connus de l'homme du métier par ailleurs, par exemple dans les domaines de l'analyse chimique, des aérosols inhalateurs pour le traitement de maladies respiratoires, de l'humidification, de la diffusion d'huiles essentielles...etc...

Quand une très bonne précision est requise, on pourra mettre en oeuvre une pompe doseuse pour délivrer le ferment dans la canalisation de gaz.

On décrit dans ce qui suit un exemple de mise en oeuvre :
- on conditionne des portions de 100g de crevettes dans des emballages de 400cm³ contenant 50% de gaz en volume. Les crevettes au final doivent contenir 10⁷ UFC/g d'une bactérie souhaitée.

On souhaite donc introduire 10⁹UFC dans 200cm³ de gaz, le gaz bio-protecteur doit donc contenir 5.10⁶UFC/cm³. En partant d'une suspension concentrée à 10¹⁰UFC/ml, on disperse 0,0001 ml de la suspension par cm³ de gaz, soit 1 ml de liquide par litre de gaz.

La présente invention concerne alors un procédé de conditionnement d'un produit, notamment d'un produit alimentaire, sous atmosphère de protection, du type où :
- on positionne le produit dans un emballage ;
- on introduit dans l'emballage une atmosphère de protection ;
- on scelle l'emballage ;
se caractérisant en ce que l'atmosphère de protection est une atmosphère de bio-conservation obtenue de la façon suivante : on a introduit dans le gaz ou mélange gazeux destiné à constituer l'atmosphère à sceller dans l'emballage une composition comportant une substance bioactive ou un mélange de substances bioactives choisie(s).

L'invention pourra par ailleurs adopter l'une ou plusieurs des caractéristiques suivantes :
- ledit gaz ou mélange gazeux est le CO₂, l'azote, l'oxygène, l'argon, l'hydrogène, le N₂O, l'hélium ou un mélange d'un ou plusieurs de ces gaz.
- la composition comprend un ou des micro-organismes choisis dans le groupe formé des familles suivantes : les bactéries, les levures, les champignons, les archébactéries et protistes, les virus.
- la composition comprend un ou des métabolites de micro-organismes tels que par exemple des bactériocines.
- la composition comprend de la nisine ou des bactériocines de classe II.
- on procède à la dite introduction d'une composition comportant une ou des substances bioactives choisie(s) de la façon suivante : la composition est une suspension de la ou des substances bioactives choisie(s) dans un liquide, et on introduit cette suspension dans le gaz ou mélange gazeux destiné à constituer l'atmosphère à sceller dans l'emballage.
- le liquide est introduit, i.e dispersé, dans une conduite dans laquelle circule ledit gaz ou mélange gazeux destiné à constituer l'atmosphère à sceller dans l'emballage.
- le liquide est introduit, i.e dispersé, dans une conduite dans laquelle circule ledit gaz ou mélange gazeux destiné à constituer l'atmosphère à sceller dans l'emballage, par pulvérisation à l'aide d'une buse sous pression de liquide, le liquide étant pulvérisé en passant à travers un orifice.
- le liquide est introduit, i.e dispersé, dans une conduite dans laquelle circule ledit gaz ou mélange gazeux destiné à constituer l'atmosphère à sceller dans l'emballage, à l'aide d'un nébuliseur ultrasonique ou concentrique.
- le liquide est introduit, i.e dispersé, dans une conduite dans laquelle circule ledit gaz ou mélange gazeux destiné à constituer l'atmosphère à sceller dans l'emballage, à l'aide d'un injecteur Venturi.
- on procède à la dite introduction d'une composition comportant une ou des substances bioactives choisie(s) de la façon suivante : la composition se présente sous la forme d'une poudre, et l'on introduit la poudre dans le gaz ou mélange gazeux destiné à constituer l'atmosphère à sceller dans l'emballage.

On reconnait sur la figure 1 annexée les éléments suivants, qui permettent de visualiser un exemple de mise en oeuvre du procédé décrit précédemment :
- le liquide 1, qui est une suspension d'un ferment dans de l'eau, est introduit dans une conduite dans laquelle circule le gaz ou mélange gazeux destiné à constituer l'atmosphère à sceller dans l'emballage.
- l'atmosphère de bio-protection ainsi constituée parvient à une conditionneuse 2, alimentée par ailleurs en produits alimentaires 3 à emballer sous atmosphère protectrice.
- dans cette conditionneuse sont réalisées les étapes connues par ailleurs de l'homme du métier :
   - positionnement du produit dans un emballage ;
   - introduction dans l'emballage de l'atmosphère de bio-protection telle que proposée selon la présente invention ;
   - scellement de l'emballage ;
- on obtient ainsi en sortie de conditionneuse le produit alimentaire 4 emballé sous l'atmosphère de bio-protection recherchée.

## Revendications

1. Procédé de conditionnement d'un produit (3), notamment d'un produit alimentaire, sous atmosphère de protection, du type où :
- on positionne le produit dans un emballage ;
- on introduit dans l'emballage une atmosphère de protection ;
- on scelle l'emballage (4);
**se caractérisant en ce que** l'atmosphère de protection est une atmosphère de bio-conservation obtenue de la façon suivante : on a introduit dans le gaz ou mélange gazeux destiné à constituer l'atmosphère à sceller dans l'emballage une composition (1) comportant une substance bioactive ou un mélange de substances bioactives choisie(s).

2. Procédé selon la revendication 1, **se caractérisant en ce que** ledit gaz ou mélange gazeux est le CO₂, l'azote, l'oxygène, l'argon, l'hydrogène, le N₂O, l'hélium ou un mélange d'un ou plusieurs de ces gaz.

3. Procédé selon la revendication 1 ou 2, **se caractérisant en ce que** la composition comprend un ou des micro-organismes choisis dans le groupe formé des familles suivantes : les bactéries, les levures, les champignons, les archébactéries et protistes, les virus.

4. Procédé selon la revendication 3, **se caractérisant en ce que** la composition comprend des bactéries de la famille des bactéries lactiques.

5. Procédé selon la revendication 1 ou 2, **se caractérisant en ce que** la composition comprend un ou des métabolites de micro-organismes tels que des bactériocines.

6. Procédé selon la revendication 5, **se caractérisant en ce que** la composition comprend de la nisine ou des bactériocines de classe II.

7. Procédé selon l'une des revendications précédentes, **se caractérisant en ce que** l'on procède à la dite introduction d'une composition comportant une ou des substances bioactives choisie(s) de la façon suivante : la composition est une suspension de la ou des substances bioactives choisie(s) dans un liquide, et on introduit cette suspension dans le gaz ou mélange gazeux destiné à constituer l'atmosphère à sceller dans l'emballage.

8. Procédé selon la revendication 7, **se caractérisant en ce que** le liquide est introduit, i.e dispersé, dans une conduite dans laquelle circule ledit gaz ou mélange gazeux destiné à constituer l'atmosphère à sceller dans l'emballage.

9. Procédé selon la revendication 8, **se caractérisant en ce que** le liquide est introduit, i.e dispersé, dans une conduite dans laquelle circule ledit gaz ou mélange gazeux destiné à constituer l'atmosphère à sceller dans l'emballage, par pulvérisation à l'aide d'une buse sous pression de liquide, le liquide étant pulvérisé en passant à travers un orifice.

10. Procédé selon la revendication 8, **se caractérisant en ce que** le liquide est introduit, i.e dispersé, dans une conduite dans laquelle circule ledit gaz ou mélange gazeux destiné à constituer l'atmosphère à sceller dans l'emballage, à l'aide d'un nébuliseur ultrasonique ou concentrique.

11. Procédé selon la revendication 8, **se caractérisant en ce que** le liquide est introduit, i.e dispersé, dans une conduite dans laquelle circule ledit gaz ou mélange gazeux destiné à constituer l'atmosphère à sceller dans l'emballage, à l'aide d'un injecteur Venturi.

12. Procédé selon la revendication 8, **se caractérisant en ce que** la quantité de liquide introduite dans la conduite est ajustée à l'aide d'une pompe doseuse.

13. Procédé selon l'une des revendications 1 à 6, **se caractérisant en ce que** on procède à la dite introduction d'une composition comportant une ou des substances bioactives choisie(s) de la façon suivante : la composition se présente sous la forme d'une poudre, et l'on introduit la poudre dans le gaz ou mélange gazeux destiné à constituer l'atmosphère à sceller dans l'emballage.

14. Procédé selon la revendication 13, **se caractérisant en ce que** la quantité de poudre introduite dans la conduite est ajustée à l'aide d'une pompe doseuse.
